# EUROPÄISCHE PATENTANMELDUNG

(11) **EP 2 905 466 A1**
(43) Veröffentlichungstag der Anmeldung: **12.08.2015**
(21) Anmeldenummer: 14154694.5
(22) Anmeldetag: 11.02.2014
(51) Int. Cl.: F03D 9/00

(54) **Verfahren zur Reduktion eines Ausgleichsmoments in einem Antriebsstrang**

(71) Anmelder: Siemens Aktiengesellschaft, 80333 München (DE)
(72) Erfinder: Deicke, Matthias, 31311 Uetze / Schwüblingsen (DE)

(57) **Zusammenfassung**

Die Erfindung betrifft ein Verfahren zur Reduktion eines Ausgleichsmoments in einem Antriebsstrang. Der Antriebsstrang umfasst eine elektrische Maschine (2) mit einer Anzahl N ≥ 2 von unabhängigen Wicklungssystemen, eine mechanische Antriebseinheit (1) und eine Drehmomentübertragungsvorrichtung (3) zur Übertragung von Drehmoment zwischen der mechanischen Antriebseinheit (1) und der elektrischen Maschine (2). Die Ausstattung der elektrische Maschine (2) mit N ≥ 2 unabhängigen Wicklungssystemen dient zur Verringerung des maximalen Ausgleichsmoments, welches im Falle einer maschinenseitigen Spannungsänderung durch die Drehmomentübertragungsvorrichtung (3) von der elektrischen Maschine (2) zu der mechanischen Antriebseinheit (1) des Antriebsstrangs übertragen wird. Das Verfahren umfasst folgenden Schritt: die Anzahl N und die Größen der Wicklungssysteme werden so gewählt, dass der Betrag des maximalen Ausgleichsmoments des größten Wicklungssystems kleiner oder gleich dem Betrag des Drehmoments ist, welches die mechanischen Antriebseinheit schadfrei zu überstehen in der Lage ist.

## Beschreibung

Die vorliegende Erfindung betrifft ein Verfahren zur Reduktion eines Ausgleichsmoments in einem Antriebsstrang, eine Verwendung einer elektrischen Maschine mit N ≥ 2 unabhängigen Wicklungssystemen in einem Antriebsstrang sowie einen Antriebsstrang mit einem reduzierten Ausgleichsmoment.

Viele heutige Antriebssysteme umfassen einen mechanischen Teil, eine E-Maschine (= elektrische Maschine) und eine den mechanischen Teil und die E-Maschine verbindende Kupplung. Optional kann die E-Maschine mit einem Frequenzumrichter verbunden sein. Im Fall einer Windkraftanlage (= WKA) können der durch Wind angetriebene Rotor, die Rotorwelle und das Übersetzungsgetriebe dem mechanischen Teil zugeordnet und der Generator als E-Maschine betrachtet werden.

Sofern es an den Klemmen der E-Maschine, den Zuleitungen der E-Maschine, im Frequenzumrichter oder im Netz zu Spannungsänderungen, insbesondere einem Kurzschluss, kommt, entsteht an der Welle der E-Maschine ein Ausgleichsmoment; im Falle eines Kurzschlusses wird das Ausgleichsmoment als Kurzschlussmoment bezeichnet. Je nach Maschinentyp - permanent erregte Synchronmaschine, Asynchronmaschine, doppelt-gespeiste Asynchronmaschine, elektrisch erregte Synchronmaschine, usw. - und Ausführung - Beispiel: 2-, 4-, 6-polig - variiert das Ausgleichsmoment erheblich. Das Ausgleichsmoment belastet den mechanischen Teil des Antriebsstrangs. Beim Generatorkurzschluss blockiert der Generator, während vom Rotor weiterhin das Antriebsmoment eingeleitet wird.

Zwischen den mechanischen Teil des Antriebsstrangs und die elektrische Maschine kann zur Drehmomentübertragung eine Kupplung vorgesehen sein, welche zudem über einen Überlastschutz verfügt. Der Überlastschutz hat die Aufgabe, den Einfluss des Ausgleichsmoments, insbesondere die Höhe des Kurzschlussmoments, zu begrenzen, um den mechanischen Teil vor zu hohen Momenten zu schützen. Der Überlastschutz kann z.B. in Form einer Rutschkupplung oder eines sonstigen Drehmomentbegrenzers ausgeführt sein. Eine Überlastkupplung für eine WKA ist z.B. in EP 1 445 484 B1 (Renk AG) 11.08.2004 beschrieben. Kupplungen mit Überlastschutz können allerdings je nach Antriebssystem einen großen Bauraum beanspruchen und hohe Kosten erzeugen.

Aufgabe der vorliegenden Erfindung ist es, ein verbessertes Antriebssystem bereitzustellen.

Die Aufgabe wird durch ein Verfahren mit den in Anspruch 1 angegebenen Merkmalen gelöst. Das Verfahren dient einer Reduktion eines Ausgleichsmoments in einem Antriebsstrang. Der Antriebsstrang umfasst dabei eine elektrische Maschine mit einer Anzahl N ≥ 2 von unabhängigen, im Wesentlichen gleich großen Wicklungssystemen. Der Antriebsstrang umfasst außerdem eine mechanische Antriebseinheit und eine Drehmomentübertragungsvorrichtung zur Übertragung von Drehmoment zwischen der mechanischen Antriebseinheit und der elektrischen Maschine. Die Ausstattung der elektrischen Maschine mit N ≥ 2 unabhängigen Wicklungssystemen dient zur Verringerung des maximalen Ausgleichsmoments, welches im Falle einer maschinenseitigen Spannungsänderung durch die Drehmomentübertragungsvorrichtung von der elektrischen Maschine zu der mechanischen Antriebseinheit des Antriebsstrangs übertragen wird. Gemäß dem Verfahren werden die Anzahl N und die Größen der Wicklungssysteme so gewählt, dass der Betrag des maximalen Ausgleichsmoments des größten Wicklungssystems kleiner oder gleich dem Betrag des Drehmoments ist, welches die mechanischen Antriebseinheit schadfrei zu überstehen in der Lage ist.

Die Aufgabe wird außerdem durch eine Verwendung mit den in Anspruch 6 angegebenen Merkmalen gelöst. Eine elektrische Maschine mit N ≥ 2 unabhängigen Wicklungssystemen wird in einem Antriebsstrang zur Verringerung des maximalen Ausgleichsmoments verwendet, welches im Falle einer maschinenseitigen Spannungsänderung durch eine Drehmomentübertragungsvorrichtung von der elektrischen Maschine zu der mechanischen Antriebseinheit des Antriebsstrangs übertragen wird.

Die Aufgabe wird außerdem durch einen Antriebsstrang mit einem reduzierten Ausgleichsmoment mit den in Anspruch 7 angegebenen Merkmalen gelöst. Der Antriebsstrang umfasst eine mechanische Antriebseinheit, welche in der Lage ist, ein Drehmoment des Betrags M schadfrei zu überstehen. Der Antriebsstrang umfasst ferner eine elektrische Maschine mit N ≥ 2 unabhängigen Wicklungssystemen. Der Antriebsstrang umfasst außerdem eine Drehmomentübertragungsvorrichtung zur Übertragung von Drehmoment zwischen der mechanischen Antriebseinheit und der elektrischen Maschine. Dabei sind die Anzahl N und die Größen der Wicklungssysteme so dimensioniert, dass der Betrag des maximalen Ausgleichsmoments des größten Wicklungssystems kleiner oder gleich dem Betrag M ist.

Die der Erfindung zugrunde liegende Idee ist, dass der Einsatz mehrerer Wicklungssysteme in einer elektrischen Maschine eines Antriebsstrangs bewusst zur Verringerung des maximal auftretenden Ausgleichsmomentes an den mechanischen Bauteilen des Antriebsstrangs genutzt wird. Zwar existieren bereits elektrische Maschinen mit mehreren Wicklungssystemen am Markt. Die Anzahl bzw. Größe der Wicklungssysteme wird jedoch bisher nicht nach der Höhe des maximal auftretenden Ausgleichsmomentes ausgelegt. Vielmehr werden unabhängige Wicklungssysteme eingesetzt, wenn eine Redundanz der Umrichter, eine Wirkungsgradsteigerung oder eine bessere Netzverträglichkeit erzielt werden soll.

Aufgrund der erzielten Verringerung des maximal auftretenden Ausgleichsmomentes wird es möglich, gänzlich ohne einen Überlastschutz, der bisher zur Vermeidung von schädlichen überhohen Drehmomenten zwischen der elektrischen Maschine und einer mechanischen Antriebseinheit angeordnet wurde, auszukommen oder ihn zumindest kleiner dimensionieren zu können.

Auf diese Weise können Generatorentypen, die in einer Ausführung mit einem einzigen Wicklungssystem ein relativ großes Ausgleichsmoment aufweisen und somit bislang nur in Verbindung mit aufwändigen Überlastschutz-Einheiten wie Rutschelementen und Drehmomentenbegrenzer an mechanische Antriebseinheiten gekoppelt wurden, nunmehr ohne aufwändige Überlastschutz-Einheiten an mechanische Antriebseinheiten gekoppelt werden, ohne diese zu gefährden. Beispielsweise wurden Kompaktantriebe bisher nur mit permanent erregten Maschinen (= PM) ausgeführt, da diese bei Spannungsänderungen ein relativ geringes Ausgleichsmoment erzeugen. Dagegen waren bislang bestimmte Maschinentypen, wie z.B. elektrisch erregte Maschinen (= EEM), insbesondere bei mittelschnellen Systemen, nur durch den Einsatz großer und teurer Kupplungen mit Überlastschutz in den Antriebsstrang integrierbar. Durch die vorliegende Erfindung ist es somit möglich, permanent erregte Maschinen durch elektrisch erregte Maschinen zu ersetzen, obwohl EEM grundsätzlich ein deutlich höheres Kurzschlussmoment als PM haben. Dies ist im Hinblick darauf, dass durch den Einsatz von EEM die Abhängigkeit von Seltenen Erden deutlich verringert wird, besonders vorteilhaft.

Die N unabhängigen Wicklungssysteme müssen theoretisch nicht im Wesentlichen gleich groß sein, d.h. im Wesentlichen die gleiche elektro-magnetische Kraft entwickeln. Allerdings ist es aus praktischen Erwägungen vorteilhaft, keine ungleichen Wicklungssysteme einzusetzen. Die Einschränkung "im Wesentlichen" berücksichtigt, dass zwei Systeme nur innerhalb einer gewissen Toleranz gleich groß ausgelegt werden können.

Vorteilhafte Ausgestaltungen und Weiterbildungen der Erfindung sind in den abhängigen Ansprüchen angegeben. Dabei kann das erfindungsgemäße Verfahren bzw. die erfindungsgemäße Verwendung auch entsprechend den abhängigen Vorrichtungsansprüchen weitergebildet sein, und umgekehrt.

Gemäß einer bevorzugten Ausgestaltung des Verfahrens werden die N Wicklungssysteme im Wesentlichen gleich groß dimensioniert und die Anzahl N wird gewählt als der auf die nächstgrößere ganze Zahl aufgerundete Quotient K/M. Die Zahl K ist der Betrag des Ausgleichsmoments der elektrischen Maschine, welches bei gleichzeitigem Kurzschluss der N Wicklungssysteme auftritt. Die Zahl M ist der Betrag des Drehmoments, welches die mechanischen Antriebseinheit schadfrei zu überstehen in der Lage ist. Durch die im Wesentlichen gleich große Dimensionierung der Wicklungssysteme ergeben sich große Vorteile in der Fertigung der elektrischen Maschine.

Gemäß einer bevorzugten Ausgestaltung des Verfahrens ist der Antriebsstrang ein Antriebsstrang einer Windkraftanlage und die elektrische Maschine ein Generator. Da die Wartung von WKA aufgrund ihrer Exposition, insbesondere der Off-Shore-Anlagen, besonders kosten- und zeitaufwändig ist, ist eine verringerte Überlast und folglich eine verringerte Schadenshäufigkeit bei WKA besonders vorteilhaft.

Gemäß einer bevorzugten Ausgestaltung des Verfahrens ist die elektrische Maschine eine elektrisch erregte Maschine. Elektrisch erregte Maschinen sind besonders attraktiv, da sie gegenüber permanent erregten Maschinen einen relativ geringen Einsatz von Seltenen Erden erfordern. Durch die vorliegende Erfindung ist es nun möglich, permanent erregte Maschinen durch elektrisch erregte Maschinen zu ersetzen, obwohl EEM grundsätzlich, d.h. jeweils in einer Ausführung mit einem einzigen Wicklungssystem, ein deutlich höheres Kurzschlussmoment als PM haben.

Gemäß einer bevorzugten Ausgestaltung des Verfahrens weist die mechanische Antriebseinheit ein Getriebe. Getriebe sind sehr schadensanfällig gegenüber Überlasten; eine Reparatur bzw. ein Austausch eines beschädigten Getriebes kann sehr hohe Kosten und lange Ausfallszeiten hervorrufen. Daher ist die vorliegende Erfindung für Antriebsstränge, in denen die mechanische Antriebseinheit ein Getriebe umfasst, besonders vorteilhaft.

Gemäß einer bevorzugten Weiterbildung des Antriebsstrangs weist die elektrische Maschine mindestens eine Anzahl N ≥ 2 unabhängiger, im Wesentlichen gleich großer Wicklungssysteme auf. Dabei ergibt sich N als der auf die nächstgrößere ganze Zahl aufgerundete Quotient K/M, wobei K der Betrag des Ausgleichsmoments der elektrischen Maschine ist, welches bei gleichzeitigem Kurzschluss der N Wicklungssysteme auftritt. Durch die im Wesentlichen gleich große Dimensionierung der Wicklungssysteme ergeben sich große Vorteile in der Fertigung der elektrischen Maschine.

Gemäß einer bevorzugten Weiterbildung der Erfindung wird die elektrische Maschine mit N Klemmenkästen oder mit N getrennten Anschlussräumen im Klemmenkasten ausgeführt. Dadurch kann sichergestellt werden, dass ein Kurzschluss im Klemmenkasten nicht zu einem gleichzeitigen Kurzschluss aller N Wicklungssysteme führt.

Im Folgenden wird die Erfindung unter Zuhilfenahme der beiliegenden Zeichnungen näher erläutert.
- Fig. 1: zeigt schematisch einen herkömmlichen Antriebsstrang einer WKA; und
- Fig. 2: zeigt schematisch einen Antriebsstrang einer WKA mit einem Generator mit mehreren unabhängigen Wicklungssystemen.

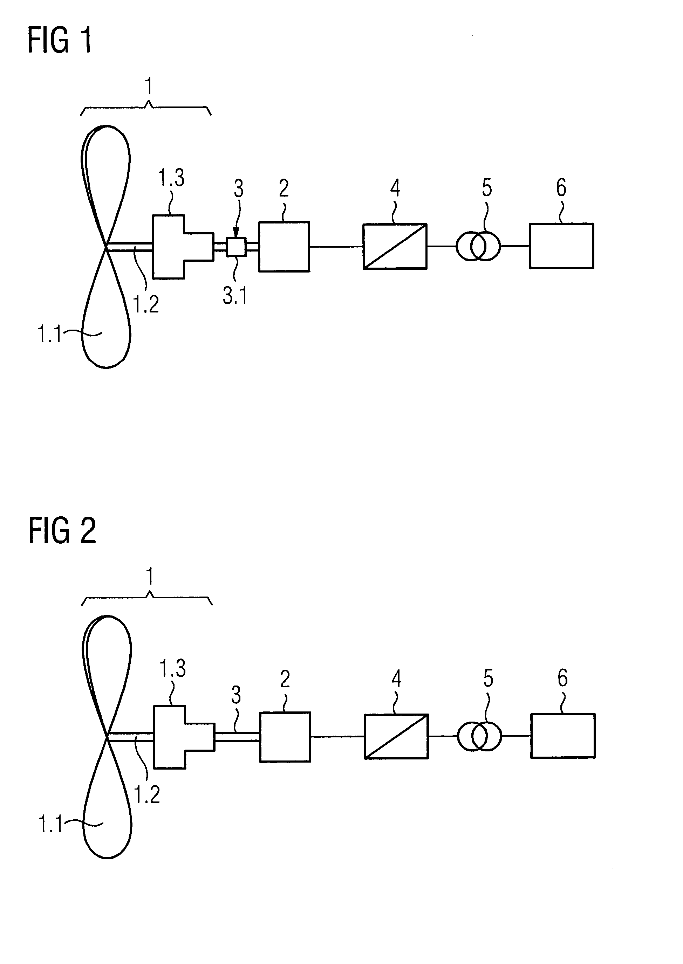

Fig. 1 zeigt einen herkömmlichen Antriebsstrang einer WKA, der eine mechanische Antriebseinheit 1, eine elektrische Maschine in Form eines Generators 2 mit einem einzigen Wicklungssystem, eine Drehmomentübertragungsvorrichtung 3 zur Übertragung von Drehmoment zwischen der mechanischen Antriebseinheit 1 und der elektrischen Maschine 2, einen Umrichter 4, einen Transformator 5 und einen Netzanschluss 6 umfasst. Die mechanische Antriebseinheit 1 der WKA umfasst einen durch Wind antreibbaren Rotor 1.1, eine mit dem Rotor 1.1 drehfest verbundene Rotorwelle 1.2 sowie ein ein- oder mehrstufiges Übersetzungsgetriebe 1.3, dessen Eingangsstufe mit der Rotorwelle 1.2 drehfest verbunden ist.

Im Regelfall wird Drehmoment von einer Abtriebswelle des Getriebes 1.3 mittels der Drehmomentübertragungsvorrichtung 3 auf den Generator 2 übertragen. Kommt es allerdings zu einer Spannungsänderung an den elektrischen Spannungsklemmen des Generators 2, z.B. im Falle eines Kurzschlusses, so entsteht generatorseitig ein Ausgleichsmoment, welches über die Drehmomentübertragungsvorrichtung 3 auf das Getriebe 1.3 übertragen wird und dort die mechanische Antriebseinheit 1 belastet.

Um diesen Überlastfall, der Schäden am Getriebe 1.3 und/oder anderen Komponenten der mechanischen Antriebseinheit 1 hervorrufen kann, zu vermeiden, wird bislang die Drehmomentübertragungsvorrichtung 3 mit einer Überlastschutz-Einheit 3.1 ausgestattet, z.B. einer Rutscheinheit, einer Rutschkupplung oder einem Drehmomentenbegrenzer, welche ab einem bestimmten Drehmoment durchrutscht und somit die Übertragung eines zu hohen Drehmoments, welches die mechanischen Antriebseinheit 1 übermäßig belasten würde, verhindert.

Bei einem elektrischen Kurzschluss an den Spannungsklemmen des Generators 2 oder im Umrichter 4 kann generatorseitig ein Kurzschlussmoment entstehen, welches ca. dem K-fachen Nenndrehmoment des Antriebsstrangs entspricht; z.B. ist ein typischer Wert K = 7,5. Je nach Maschinentyp kann das Kurzschlussmoment höher oder tiefer ausfallen. Das Getriebe 1.3 ist aber nur in der Lage, das M-fache Nenndrehmoment schadfrei zu überstehen; z.B. ist ein typischer Wert M = 2. Zur Begrenzung der Drehmoments, welches mittels der Drehmomentübertragungsvorrichtung 3 von dem Generator auf das Getriebe 1.3 übertragen wird, und zur Eliminierung eines schädlichen Einflusses auf das Getriebe 1.3 wird das Kurzschlussmoment nach dem Stand der Technik mit der Überlastschutz-Einheit 3.1, z.B. einer Rutscheinheit oder einem Drehmomentbegrenzer, auf das M-fache Nenndrehmoment oder weniger limitiert. Der Kaufpreis einer solchen Rutscheinheit richtet sich ungefähr nach dem Nenndrehmoment der Maschine und nach der im "Rutschfall" umgesetzten Energiemenge. Zum Beispiel kann bei einer 3 MW-WKA das Nenndrehmoment bei 2500 kNm liegen.

Aus o.g. folgt, dass der Preis einer Rutschkupplung bei mittelschnellen Systemen quasi umgekehrt proportional zur Nenndrehzahl der Maschine ansteigt, d.h. der Kupplungspreis steigt in der Regel um mehr als das 3 bis 4-fache der anderen mechanischen Komponenten des Antriebsstrangs und nimmt einen signifikanten Preisanteil an der gesamten WKA an.

Während permanenterregte Synchronmaschinen in vielen Fällen dennoch relativ kostengünstig als mittelschnelle Systeme gebaut werden können, da bei diesem Maschinentyp (= mittelschnelle PMG) das Kurzschlussmoment nur etwas das 1,8 bis 2-fache des Nenn-Drehmomentes beträgt, benötigt man für andere Maschinentypen, u.a. auch elektrisch erregte Synchronmaschinen, bislang eine Überlastschutz-Einheit.

Fig. 2 zeigt einen erfindungsgemäßen Antriebsstrang einer WKA; dabei ist der Antriebsstrang weitgehend dieselben Komponenten auf wie der in Fig. 1 dargestellte Antriebsstrang, allerdings ist der Generator 2 anstatt mit einem einzigen Wicklungssystem nunmehr mit N = 4 unabhängigen, gleich großen Wicklungssystemen ausgestattet. Auf diese Weise ist der Betrag des maximalen Ausgleichsmoments, welches im Falle eines Kurzschlusses einer der N Wicklungssysteme entsteht, kleiner als das M-fache Nenndrehmoment, so dass das Getriebe schadfrei bleibt. Folglich kann auf eine Überlastschutz-Einheit 3.1 in der die Drehmomentübertragungsvorrichtung 3 verzichtet werden.

Die erforderliche Anzahl N von unabhängigen, gleich großen Wicklungssystemen sich ergibt als der auf die nächstgrößere ganze Zahl aufgerundete Quotient K/M; dabei ist K der Betrag des Ausgleichsmoments der elektrischen Maschine, welches bei gleichzeitigem Kurzschluss der N Wicklungssysteme auftritt, und M der Betrag des Drehmoments, welches die mechanischen Antriebseinheit schadfrei zu überstehen in der Lage ist.

Im Falle der o.g. typischen Werte von K = 7,5 und M = 2 ergibt sich der Quotient K/M = 7,5/2 = 3,75. Durch Aufrunden des Quotienten 3,75 auf die nächstgrößere ganze Zahl ergibt sich eine Anzahl von N = 4 Wicklungssystemen. Die Erfindung besteht darin, dass die E-Maschine mit mehreren (hier: N = 4) unabhängigen Wicklungssystemen ausgestattet wird. Für den Fall einer Spannungsänderung auf einem der gleich großen Wicklungssysteme reduziert sich das Ausgleichsmoment auf 1/N gegenüber der Ausführung der E-Maschine mit einem einzigen Wicklungssystem. Das Kurzschlussmoment eines Generators, hervorgerufen durch einen Kurzschluss an einem von insgesamt N gleich großen Wicklungssystemen, beträgt also 1/N des Generators, der mit einem einzigen Wicklungssystem ausgestattet ist; d.h. bei 4 gleich großen Wicklungssystemen beträgt das Kurzschlussmoment nur 1/4 des vollen Kurzschlussmoments, welches bei gleichzeitigen Kurzschluss aller Systeme auftritt. In der Folge kann auf eine Überlastschutz-Einheit, z.B. ein Rutschelement oder einen Drehmomentbegrenzer, verzichtet werden.

Der Begriff "N (mehrere) unabhängige Wicklungssysteme" bedeutet in einer besonders bevorzugten Ausgestaltung, dass die Maschine mit N voneinander galvanisch isolierten 3-Phasen Systemen ausgestattet ist. Eine "normale" Drehstrommaschine ist mit einem 3-Phasen System (U,V,W) ausgestattet. Die N-Systeme sind räumlich am Umfang der Maschine verteilt. Die Begriffe Kurzschluss und Kurzschlussmoment sind hier beispielhaft gewählt. Es kann sich um jede Form einer Spannungsänderung und des damit einhergehenden mechanischen Ausgleichsvorgangs handeln.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Verfahren zur Reduktion eines Ausgleichsmoments in einem Antriebsstrang,
wobei der Antriebsstrang eine elektrische Maschine (2) mit einer Anzahl N ≥ 2 unabhängiger Wicklungssysteme, eine mechanische Antriebseinheit (1) und eine Drehmomentübertragungsvorrichtung (3) zur Übertragung von Drehmoment zwischen der mechanischen Antriebseinheit (1) und der elektrischen Maschine (2) umfasst und
wobei die Ausstattung der elektrische Maschine mit N ≥ 2 unabhängigen Wicklungssystemen zur Verringerung des maximalen Ausgleichsmoments dient, welches im Falle einer maschinenseitigen Spannungsänderung durch die Drehmomentübertragungsvorrichtung (3) von der elektrischen Maschine zu der mechanischen Antriebseinheit (1) des Antriebsstrangs übertragen wird,
wobei das Verfahren folgenden Schritt umfasst:
die Anzahl N und die Größen der Wicklungssysteme werden so gewählt, dass der Betrag des maximalen Ausgleichsmoments des größten Wicklungssystems kleiner oder gleich dem Betrag des Drehmoments ist, welches die mechanischen Antriebseinheit schadfrei zu überstehen in der Lage ist.

2. Verfahren nach Anspruch 1, wobei die N Wicklungssysteme im Wesentlichen gleich groß dimensioniert werden und die Anzahl N gewählt wird als der auf die nächstgrößere ganze Zahl aufgerundete Quotient K/M, wobei K der Betrag des Ausgleichsmoments der elektrischen Maschine ist, welches bei gleichzeitigem Kurzschluss der N Wicklungssysteme auftritt, und M der Betrag des Drehmoments ist, welches die mechanischen Antriebseinheit schadfrei zu überstehen in der Lage ist.

3. Verfahren nach Anspruch 1 oder 2, wobei der Antriebsstrang ein Antriebsstrang einer Windkraftanlage und die elektrische Maschine (2) ein Generator ist.

4. Verfahren nach einem der Ansprüche 1 bis 3, wobei die elektrische Maschine (2) eine elektrisch erregte Maschine ist.

5. Verfahren nach einem der Ansprüche 1 bis 4, wobei die mechanische Antriebseinheit (1) ein Getriebe (1.3) aufweist.

6. Verwendung einer elektrischen Maschine (2) mit N ≥ 2 unabhängigen Wicklungssystemen in einem Antriebsstrang zur Verringerung des maximalen Ausgleichsmoments, welches im Falle einer maschinenseitigen Spannungsänderung durch eine Drehmomentübertragungsvorrichtung (3) von der elektrischen Maschine (2) zu der mechanischen Antriebseinheit (1) des Antriebsstrangs übertragen wird.

7. Antriebsstrang mit einem reduzierten Ausgleichsmoment, umfassend:
- eine mechanische Antriebseinheit (1), welche in der Lage ist, ein Drehmoment des Betrags M schadfrei zu überstehen,
- eine elektrische Maschine (2) mit N ≥ 2 unabhängigen Wicklungssystemen und
- eine Drehmomentübertragungsvorrichtung (3) zur Übertragung von Drehmoment zwischen der mechanischen Antriebseinheit (1) und der elektrischen Maschine (2),
wobei die Anzahl N und die Größen der Wicklungssysteme so dimensioniert sind, dass der Betrag des maximalen Ausgleichsmoments des größten Wicklungssystems kleiner oder gleich dem Betrag M ist.

8. Antriebsstrang nach Anspruch 7, wobei die elektrische Maschine (2) N im Wesentlichen gleich große Wicklungssysteme aufweist, wobei N sich ergibt als der auf die nächstgrößere ganze Zahl aufgerundete Quotient K/M, wobei K der Betrag des Ausgleichsmoments der elektrischen Maschine ist, welches bei gleichzeitigem Kurzschluss der N Wicklungssysteme auftritt.

9. Antriebsstrang nach Anspruch 7 oder 8, wobei die elektrische Maschine (2) mit N Klemmenkästen oder mit N getrennten Anschlussräumen im Klemmenkasten ausgeführt wird.
